# EUROPEAN PATENT APPLICATION

(11) **EP 4 637 142 A1**
(43) Date of publication of application: **22.10.2025**
(21) Application number: 24315172.7
(22) Date of filing: 15.04.2024
(51) Int. Cl.: H04N 19/117, H04N 19/46, H04N 19/70, H04N 19/85

(54) **TECHNIQUES ASSOCIATED WITH A DISENTANGLED FILM GRAIN STYLE VECTOR**

(71) Applicant: InterDigital CE Patent Holdings, SAS, 75017 Paris (FR)
(72) Inventor: Demarty, Claire-Helene, 35520 MONTREUIL LE GAST (FR); Ameur, Zoubida, 35510 CESSON SEVIGNE (FR); Aumont, Franck, 35770 VERN SUR SEICHE (FR); Blonde, Laurent, 35235 THORIGNE-FOUILLARD (FR); Reinhard, Erik, 35630 HEDE-BAZOUGES (FR); Le Meur, Olivier, 35160 TALENSAC (FR)
(74) Representative: Rittner, Karsten

(57) **Abstract**

An example device may obtain a picture (e.g., a decoded picture) and decode encoded data to obtain a supplemental enhancement information (SEI) message comprising a first style vector and a first information indicating disentanglement of the first style vector; obtain a request for changing a film grain characteristic to a first changed value; identify, using the first information indicating disentanglement of the first style vector, a first style vector characteristic that corresponds to the film grain characteristic, wherein the first style vector characteristic is identified from the first information indicating disentanglement of the first style vector; modify the first style vector characteristic based on the film grain characteristic being set to the first changed value to derive a modified first style vector; generate the film grain on the picture, wherein the film grain is generated using the modified first style vector.

## Description

### BACKGROUND

Video coding systems may be used to compress digital video signals, e.g., to reduce the storage and/or transmission bandwidth needed for such signals. Video coding systems may include, for example, block-based, wavelet-based, and/or object-based systems.

### SUMMARY

Systems, devices, and methods are described herein for using a disentangled film grain style vector.

An example device (e.g., a decoder for video decoding ) may include a processor configured to perform one or more actions. For example, the device may obtain a picture (e.g., obtain in a bitstream). In some examples, the picture may be decoded from an encoded data. The device may obtain encoded data. (e.g., obtained from a bitstream). The device may decode a supplemental enhancement information (SEI) message (e.g., from encoded data or from a bitstream) comprising at least one of a first style vector or a first information indicating disentanglement of the first style vector. The device may obtain a request for changing a film grain characteristic to a first changed value. The device may identify, using the first information indicating how to disentangle the first style vector, a first style vector characteristic that corresponds to the film grain characteristic. The device may modify the first style vector characteristic based on the film grain characteristic being set to the first changed value to derive a modified first style vector. The device may generate the film grain on the picture. The film grain may be generated using the modified first style vector. The device may use (e.g., send, for displaying,) the picture with the generated film grain.

The first information indicating disentanglement of the first style vector may include information indicating how properties associated with the film grain are organized in the first style vector. The first information indicating how to disentangle the first style vector may include information about dividing the first style vector into at least one of: one or more parts, one or more subparts, or, one or more subparts of the subparts, each corresponding to a characteristic or a category of characteristics.

The device may map style vector characteristics to grain characteristics that are indicated by a supplemental information associated with a video coding technique (e.g., the MPEG Film Grain Characteristics SEI message). The SEI message may include a second style vector and a second information indicating disentanglement of the second style vector.

The device may identify a second style vector characteristic based on the second information indicating disentanglement of the second style vector. The device may modify the second style vector characteristic based on the film grain characteristic being set to a second changed value to derive a modified second style vector. The device may modulate the modified first style vector by the modified second style vector to generate a modulated modified first style vector. The device may use the modulated modified first style vector for film grain synthesis.

At least the first style vector or the second style vector may be computed to be used on different parts of the picture. A size of the first style vector or the second style vector may be 8 bits.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a diagram showing an example block-based video encoder.
FIG. 3 is a diagram showing an example video decoder.
FIG. 4 is a diagram showing an example of a system in which various aspects and examples may be implemented.
FIG. 5 illustrates an example of film grain analysis and synthesis.
FIG. 6 illustrates an example film grain model for a given intensity range.
FIG. 7 illustrates an example of variation of grain standard deviation versus intensity.
FIG. 8 illustrates an example evolution of a scaling factor according to intensity level.
FIG. 9 illustrates an example encoder-side technique.
FIG. 10 illustrates an example encoder-side technique if more than one grain analyzer (e.g., with different disentanglements) are used.
FIG. 11 illustrates an example decoder-side technique based on a disentangled style vector.
FIG. 12 illustrates an example decoder-side technique based on a disentangled style vector and associated information.

### DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

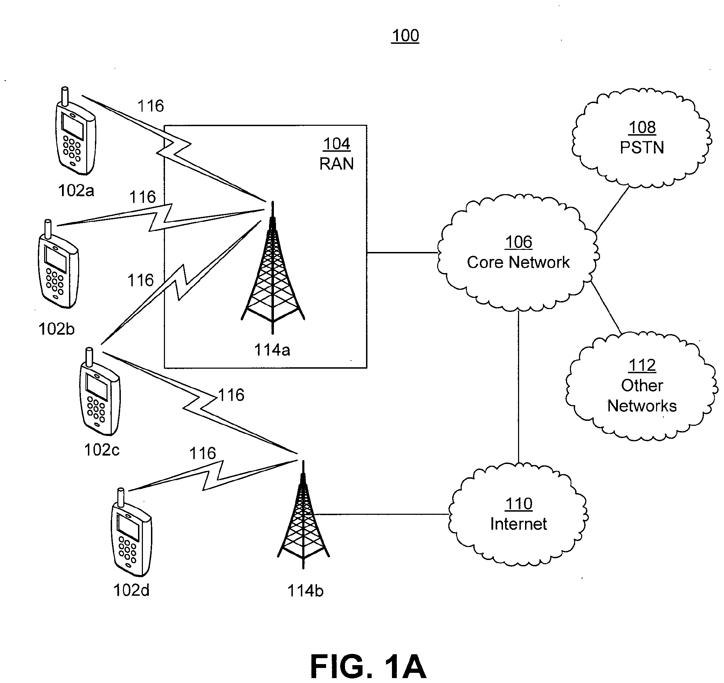

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

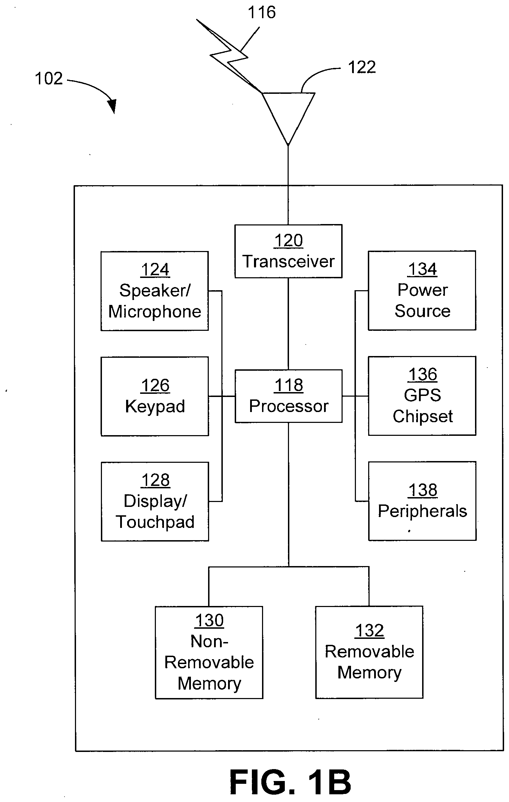

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

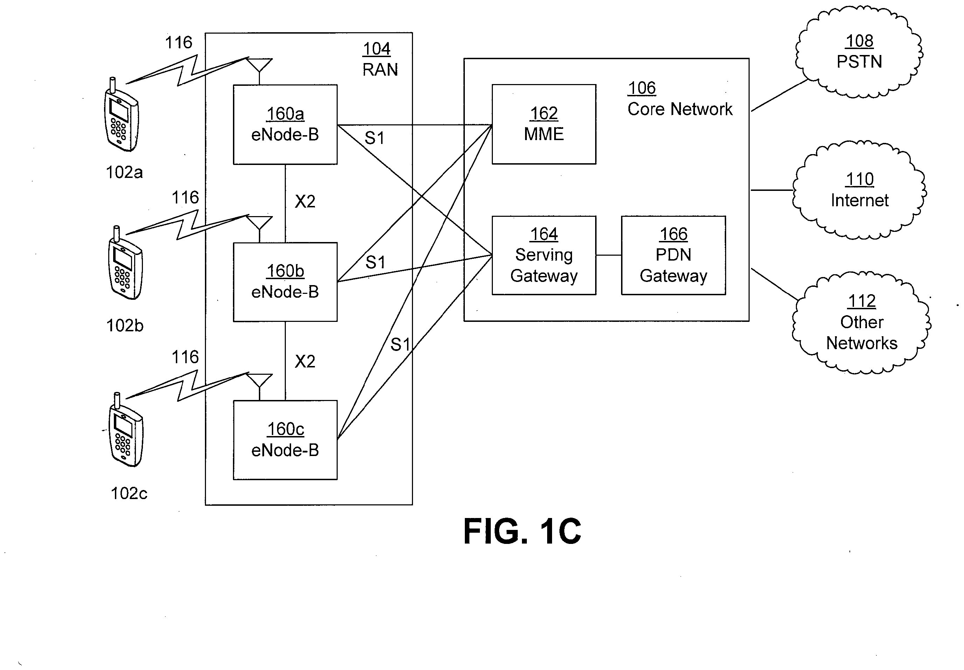

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

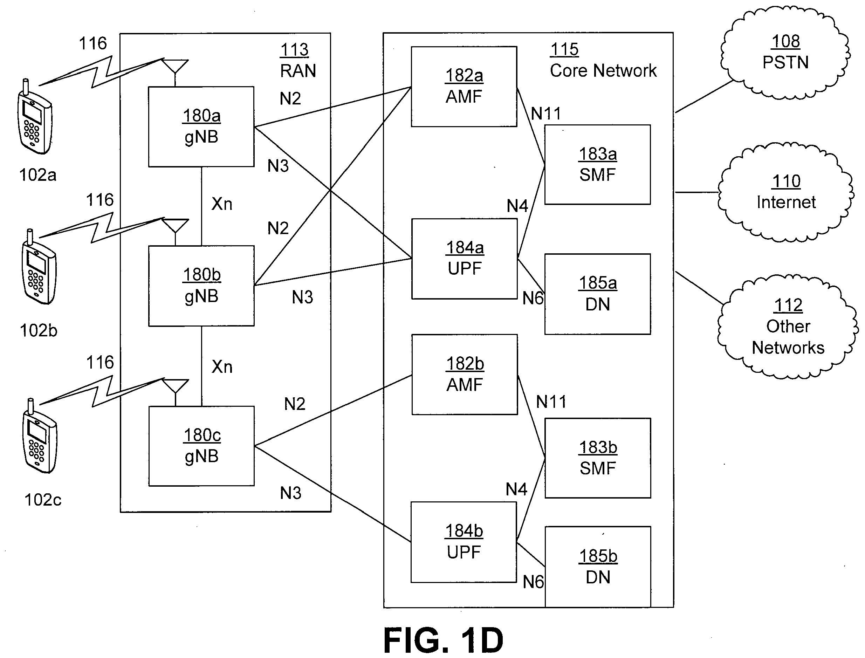

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

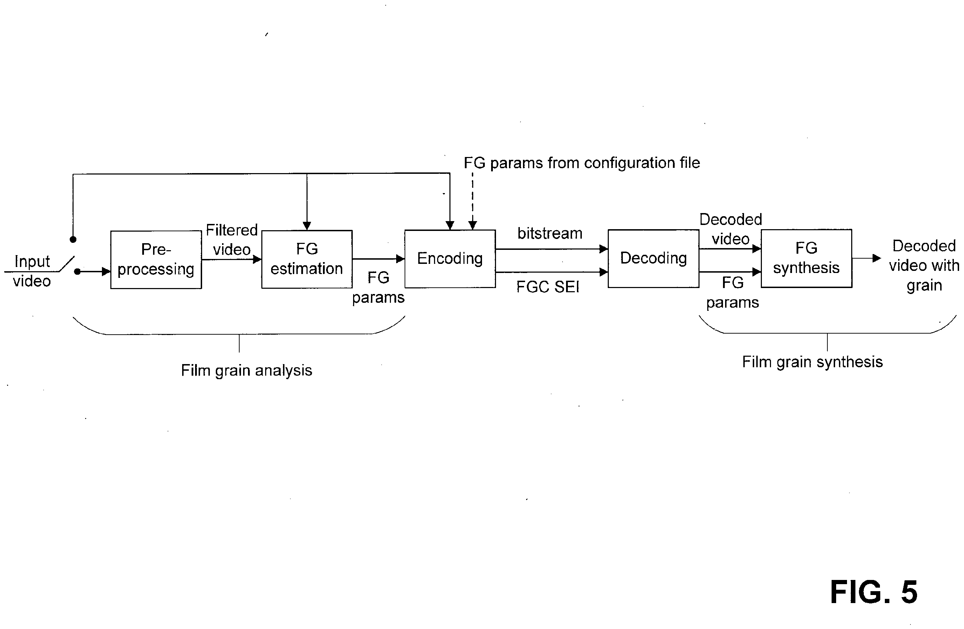

The aspects described and contemplated in this application may be implemented in many different forms. FIGS. 5-12 described herein may provide some embodiments, but other embodiments are contemplated. The discussion of FIGS. 5-12 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

The terms HDR (high dynamic range) and SDR (standard dynamic range) may be used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

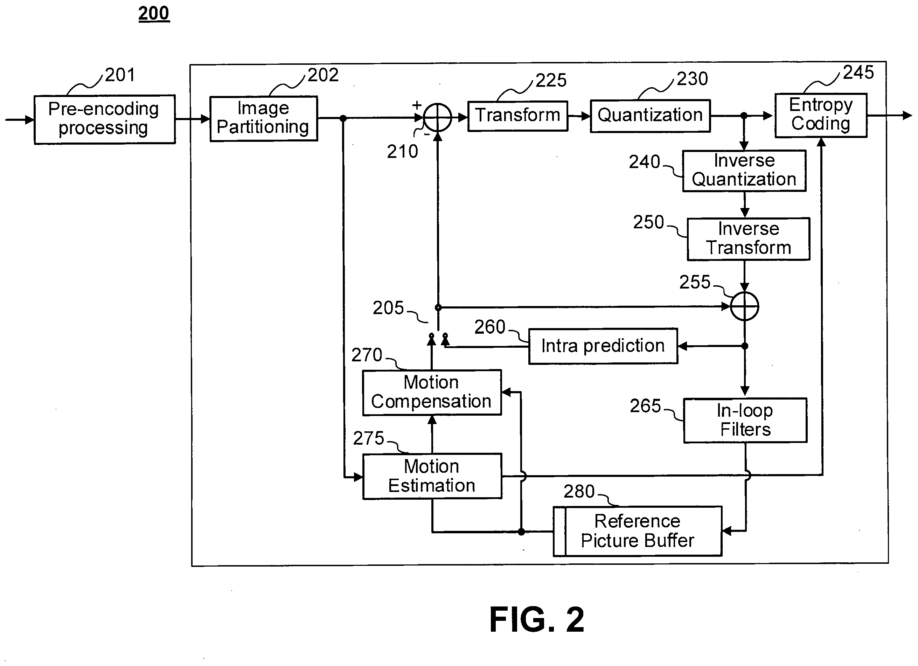

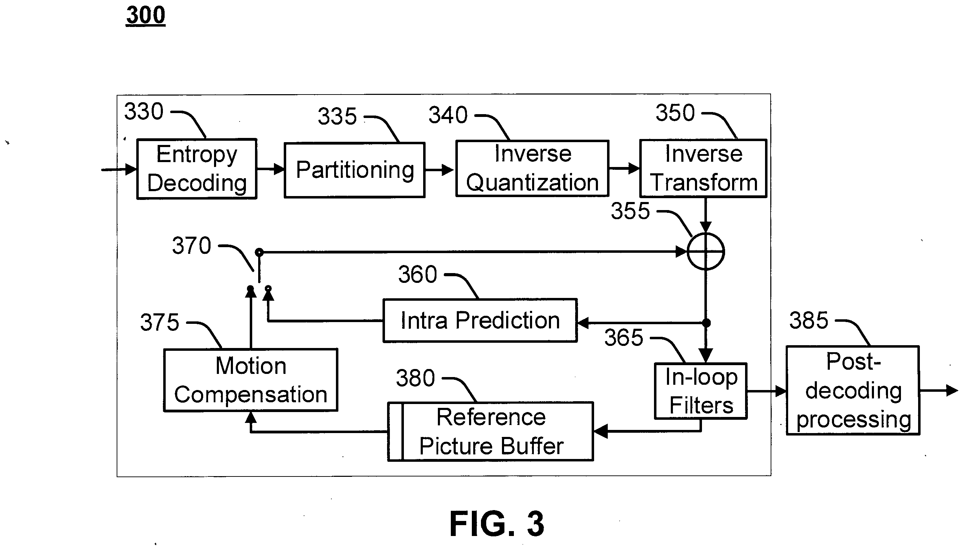

Various methods and other aspects described in this application may be used to modify modules, for example, intra prediction and entropy coding and/or decoding modules (260, 360, 245, 330), of a video encoder 200 and decoder 300 as shown in FIG. 2 and FIG. 3, respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described the present application, such as coefficients, block sizes, etc. These and other specific values are for purposes of describing examples and the aspects described are not limited to these specific values.

FIG. 2 is a diagram showing an example video encoder (e.g., an example block-based hybrid video encoder) 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (Cus). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder 300. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). For a given picture, the contents of the reference picture buffer 380 on the decoder 300 side may be identical to the contents of the reference picture buffer 280 on the encoder 200 side for the same picture.

The decoded picture can further go through post-decoding processing (385), for example, an inverse color transform (e.g., conversion from YcbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

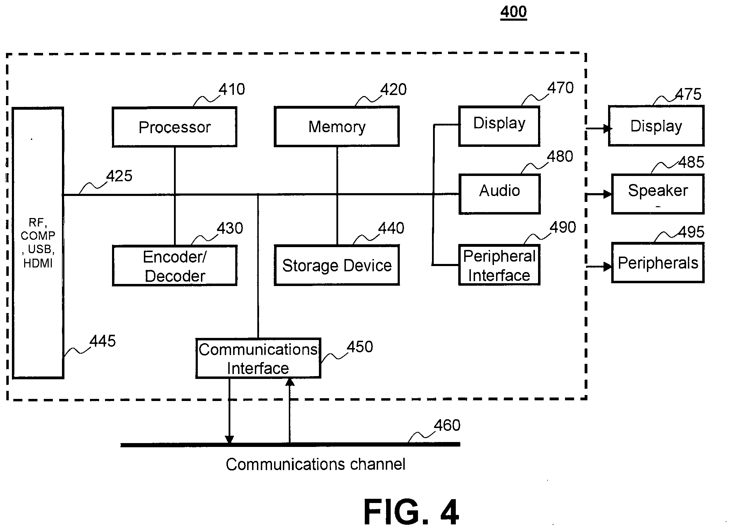

FIG. 4 is a diagram showing an example of a system in which various aspects and embodiments described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple Ics, and/or discrete components. For example, in at least one example, the processing and encoder/decoder elements of system 400 are distributed across multiple Ics and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface Ics or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device (e.g., connected glasses). The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, obtaining a picture (e.g., through decoding encoded data to obtain a decoded picture), and decoding encoded data to obtain a supplemental enhancement information (SEI) message comprising a first style vector and a first information indicating disentanglement of the first style vector; obtaining a request for changing a film grain characteristic to a first changed value; identifying, using the first information indicating disentanglement of the first style vector, a first style vector characteristic that corresponds to the film grain characteristic, wherein the first style vector characteristic is identified from the first information indicating disentanglement of the first style vector; modifying the first style vector characteristic based on the film grain characteristic being set to the first changed value to derive a modified first style vector; generating the film grain on the picture, wherein the film grain is generated using the modified first style vector; and using (e.g., sending, for displaying), the picture (e.g., decoded picture) with the generated film grain, etc. A block may be, for example, a coding block.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application. A block may be, for example, a coding block.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, fg_st_cancel_flag, fg_st_global_flag, fg_st_vector_size, fg_st_vector_number, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Many embodiments are described herein. Features of embodiments may be provided alone or in any combination, across various claim categories and types. Further, embodiments may include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

Feature(s) associated with the global video chain (e.g., production, encoding, transmission, decoding, rendering, etc.) are provided herein. Feature(s) associated with the analysis and synthesis of film grain are provided herein. The film grain may be removed (e.g., before encoding) and synthesized at (e.g., back at) the decoding stage (e.g., to reduce the bitrate). Example inputs are provided herein.

Feature(s) associated with video compression are provided herein. Feature(s) described herein may provide signaling mechanisms to enable synthesis of film grain at the decoder side. The following terms are used throughout this disclosure: film grain analysis, film grain synthesis, style vector, SEI signaling, metadata, video coding chain, deep learning, disentanglement.

Film grain in film and photographs may result from (e.g., may originally result from) the photosensitive silver halide particles in film stock having a certain size and distribution. A type of film (e.g., each type of film) may have its own characteristics. Each type of film may produce a slightly different look. Film grain may be an attractive feature that introduces style and interest associated with movies. Digital cameras may not produce film grain. Film grain may be added to digitally captured content (e.g., as a post-process). Film grain may be seen as a form of noise (e.g., a specific and visually attractive form of noise).

Film grain may be random in nature. The random nature of film grain may make it difficult or costly to compress using coding tools. Parameters of the encoding tools (e.g., such as those chosen for low bit rates) may remove film grain. High bitrates may be used (e.g., required) to keep and reconstruct film grain (e.g., with sufficient fidelity/quality). This may be contrary to the encoding/decoding goal of saving bits while encoding content. To overcome this encoder filtering issue, film grain may be modeled (e.g., may be required to be modeled, for example, before the encoding stage), it may then be removed and added back at the decoding stage (e.g., during a synthesis step).

Feature(s) associated with analyzing specific characteristics of film grain are provided herein. Feature(s) associated with synthesizing film grain (e.g., given specific characteristics provided as input) are provided herein.

In a video chain, to be able to synthesize back film grain at the decoder side, a parametric model of film grain may be used (e.g., required). The parametric model of film grain may correspond to the style of the grain to reconstruct. The style of some film grain present in a given content may be analyzed. The film grain may be synthesized back (e.g., as a film grain of the same style), for example, on the grain-free version of the original content. Film grain may also be modeled through the use of a style vector. The style vector may convey the characteristics of the film grain. The style vector may be used during synthesis (e.g., to ensure fidelity to the original grain). The style vector may be compact. The style vector may be easy to transmit (e.g., in the context of a video chain). The style vector may enable fidelity of the reconstruction against the different grain characteristics.

As used herein, a style vector may refer to a vector of a given dimension that includes the characteristics in terms of style of the film grain.

Feature(s) described herein related to signaling mechanisms may enable transmission of a style vector and information relative to the disentanglement of a given style vector. The information may enable a modulation of the synthesis of film grain on decoded content at the decoder side. A grain characteristic (e.g., each grain characteristic) may be accessible (e.g., in an independent manner). Feature(s) described herein may enable a mapping and/or direct use of a style vector (e.g., for existing synthesis model in actual codecs).

Example signaling mechanisms for the transmission and use of a film grain style vector are described herein.

Supplemental enhancement information (SEI) may be used for signaling information associated with film grain synthesis. Film grain modeling may be part of video coding standards. For example, the analysis and synthesis of film grain may be available in a coding technique (e.g., a compression standard).

FIG. 5 illustrates how and where the analysis and synthesis of film grain may be implemented. Information associated with film grain may be communicated as metadata (e.g., through an SEI message). FIG. 5 illustrates an example of film grain analysis and synthesis in the context of video encoding/decoding.

The grain analysis may use (e.g., require) the original frame with grain and the corresponding filtered frame without film grain. This filtered frame may be obtained via a denoising step. From the filtered frame, uniform regions may be extracted. The uniform regions may serve as a mask to estimate the grain parameters in the grain layer (e.g., computed as the difference between the original frame and its filtered version). In grain estimation, the extraction of uniform regions may be used (e.g., may be critical) because edges and textures may affect the estimation of the film grain strength and pattern.

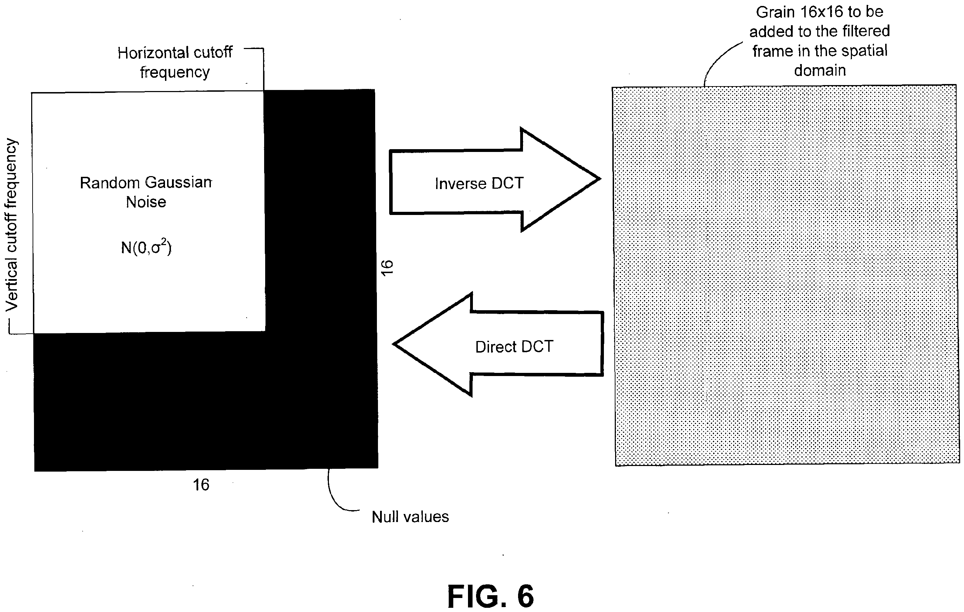

The grain model may be defined in the DCT domain of the Y channel (e.g., as depicted in FIG. 6). Y may represent the luminance channel. FIG. 6 illustrates an example film grain model for a given Y intensity range.

Blocks of 16x16 pixels may be used (e.g., considered). A 16x16 patch of grain in the Y spatial domain may follow a model based on a random Gaussian distribution in the DCT domain that is applied in (e.g., only in) a subpart of the 16x16 patch. The subpart of the patch may be defined through vertical/horizontal cut-off frequencies (e.g., defined in the DCT domain). The features (e.g., three features) that model the grain in the DCT domain may be the variance (e.g., *σ*²) of the noise and cutoff frequencies (e.g., two cutoff frequencies) that limit the area where the noise is present. The cutoff frequencies may define the grain shape. If the cutoff frequencies are equal, the grain may be circular. The DC component may be set to a null value (e.g., to obtain a centered patch grain in the spatial domain).

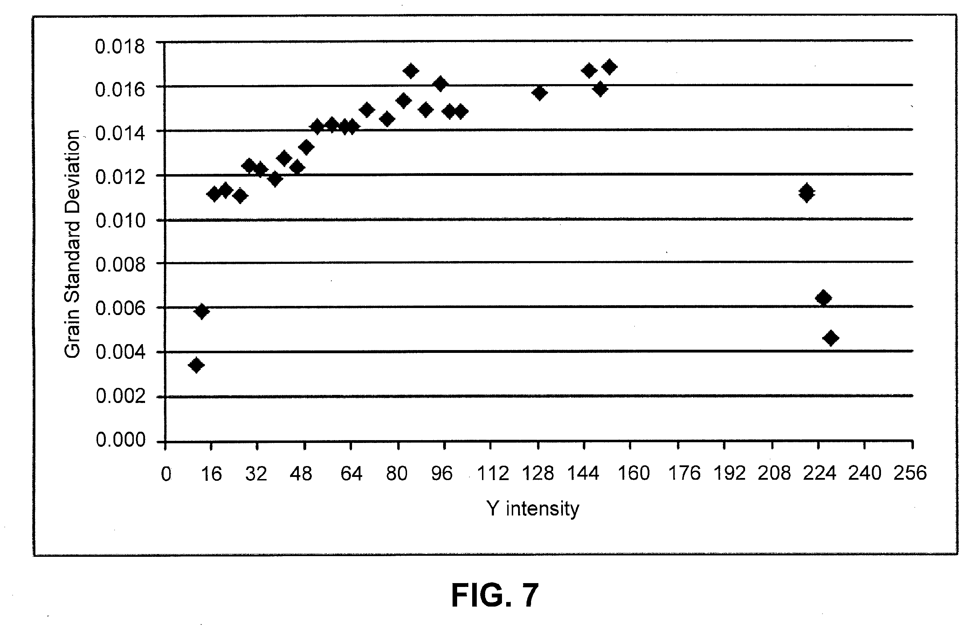

The variance value *σ*² may depend on the mean Y value of the patch to which the grain has to be added (e.g., thereby making the synthesis of film grain region dependent). FIG. 7 illustrates an example of the grain variance evolution with respect to the intensity level in the filtered Y layer. Cutoff frequency values may be (e.g., may be supposed to be) constant for a given shot. FIG. 7 illustrates an example of variation of grain standard deviation versus Y intensity.

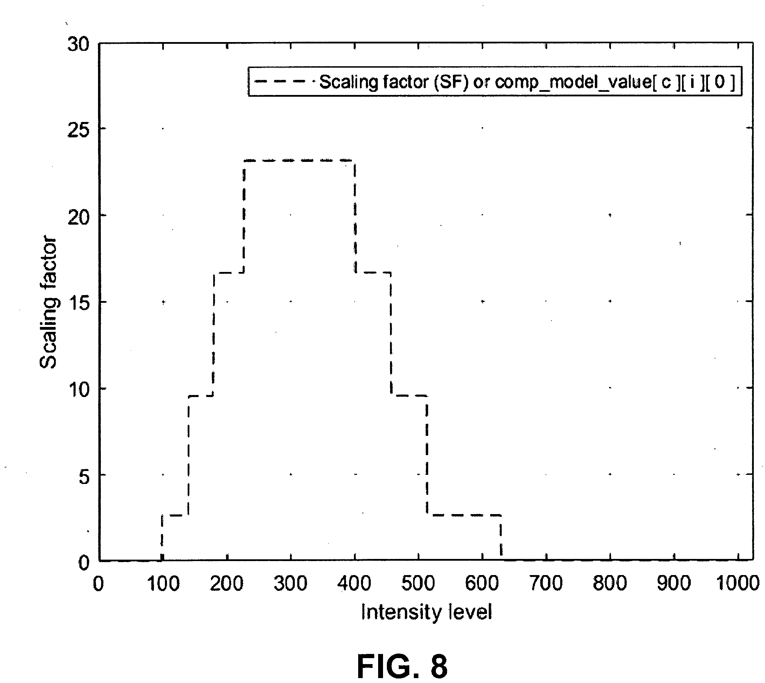

Film grain may be added/synthetized back (e.g., after the decoding of the signal, during a post processing stage). The noise/film grain may be inserted by applying a pattern/noise (e.g., unique for each camera), in plain images (e.g., with an intensity level that depends on the input signal). Different scaling factors may be applied to the film grain intensity (e.g., depending on the intensity of the content, as shown in FIG. 8). This intensity level may be a chosen constant for a given block in a given frame. Those blocks may be uniform. For example, the block may have the same size (e.g., 8x8).

Depending on the artistic look that is targeted, the film grain intensity may be made dependent on the texture present in the regions. For example, the more textured the regions are, the higher the film grain intensity may be.

FIG. 8 illustrates an example evolution of the scaling factor according to the intensity level. The film grain pattern/template may be modeled with an autoregressive process and/or represented by a piecewise linear function (e.g., that includes the grain strength for each Y, Cb, Cr). At the decoding and renoising stage, a 64×64 luma film grain template may be generated (e.g., using the film grain model from the bitstream). The film grain (e.g., a luma block of 32x32 extracted from the 64x64 film grain template) may be applied on a 32×32 luma block basis to reconstruct the picture with film grain. The film grain addition may be applied on the plain image. The block size may be fixed (e.g., not dynamically adapted to the region).

Film grain characteristics may be transmitted through an SEI message as defined in an example specification (e.g., registered by ISOIEC FDIS 23002-7) as described herein. An SEI message may provide the decoder with a parametric model for film grain synthesis (e.g., through the parameters described herein). The following are some example parameters for film grain synthesis. fg_characteristics_cancel_flag may indicate whether or not the SEI message cancels the persistence of a film grain characteristics SEI message (e.g., any previous film grain characteristics SEI message) or that the film grain modelling information follows (e.g., from a previous film grain characteristics SEI message). fg_model_id may identify the film grain simulation model between frequency filtering or auto-regression. fg separate colour description_present flag may indicate whether a distinct combination of luma, bit depth, chroma bit depth, video full range flag, colour primaries, transfer characteristics, and/or matrix coefficients for the film grain characteristics specified in the SEI message is present in the film grain characteristics SEI message syntax. fg separate colour description_present flag may indicate whether the combination of the above parameters is the same as indicated in video usability information (VUI ) parameters for the coded layer video sequence (CLVS).

fg_bit_depth_luma_minus8 plus 8 may specify the bit depth used for the luma component of the film grain characteristics specified in the SEI message. fg_bit_depth_chroma_minus8 plus 8 may specify the bit depth used for the Cb and Cr components of the film grain characteristics specified in the SEI message. fg_full_range_flag, fg_colour_primaries and fg_transfer_characteristics, fg_matrix_coeffs may have the same semantics, as described herein, for the vui_full_range_flag, the vui_colour_primaries, the vui_transfer_characteristics, the vui_matrix_coeffs syntax elements except as follows. fg_full_range_flag, fg_colour_primaries, fg_transfer_characteristics, and fg_matrix_coeffs may specify the video full range flag, the color primaries, the transfer characteristics, and the matrix coefficients, respectively, of the film grain characteristics specified in the SEI message (e.g., rather than those used for the CLVS).

If fg_full_range_flag is not present in the film grain characteristics SEI message, the value of fg_full_range_flag may be inferred to be equal to vui_full_range_flag. If fg_colour_primaries, is not present in the film grain characteristics SEI message, the value of fg_colour_primaries may be inferred to be equal to vui_colour_primaries. If fg_transfer_characteristics is not present in the film grain characteristics SEI message, the value of fg_transfer_characteristics may be inferred to be equal to vui_transfer_characteristics. If fg_matrix_coeffs is not present in the film grain characteristics SEI message, the value of fg_matrix_coeffs may be inferred to be equal to vui_matrix_coeffs.

fg_blending_mode_id may identify the blending mode used to blend the simulated film grain with the input images. The blending mode may be chosen between additive or multiplicative blending modes.

fg_log2_scale_factor may specify a scale factor used in the film grain characterization equations.

Setting fg_comp_model_present_flag[ c ] equal to 0 may indicate that film grain is not modelled on the c-th color component (e.g., where c equal to 0 refers to the luma component, c equal to 1 refers to the Cb component, and c equal to 2 refers to the Cr component). Setting fg_comp_model_present_flag[ c ] equal to 1 may indicate that syntax elements specifying modelling of film grain on color component c are present in the SEI message.

fg_num_intensity_intervals_minus1[ c ] plus 1 may specify the number of intensity intervals for which a specific set of model values has been estimated. The intensity intervals may overlap (e.g., to simulate multi-generational film grain).

fg_num_model_values_minus1[ c ] plus 1 may specify the number of model values present for an intensity interval (e.g., each intensity interval) in which the film grain has been modelled.

fg_intensity_interval_lower_bound[ c ][ i ] may specify the lower bound of the i-th intensity interval for which the set of model values applies.

fg_intensity_interval_upper_bound[ c ][ i ] may specify the upper bound of the i-th intensity interval for which the set of model values applies.

The variable intensitylntervalldx[ c ][ x ][ y ][ j ] may represent the j-th index to the list of intensities.

Intervals may be selected for the sample value 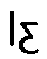 [ c ][ x ][ y ], for c = 0, ..., 2; x = 0, ..., PicWidthlnLumaSamples - 1; y = 0, ..., PicHeightlnLumaSamples - 1; and j = 0, ..., numApplicableIntensityIntervals[ c ][ x ][ y ] -1 (e.g., where numApplicablelntensitylntervals[ c ][ x ][ y ] is the number of applicable intensity intervals for the sample value 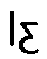 [ c ][ x ][ y ] for c = 0, ..., 2; x = ..., PicWidthInLumaSamples -1; and y = 0, ..., PicHeightlnLumaSamples -1).

fg_comp_model_value[ c ][ i ][ j ] may specify the j-th model value for the color component c and the i-th intensity interval. The set of model values may have different meanings depending on the value of fg model_id.

fg_characteristics_persistence_flag may specify the persistence of the film grain characteristics SEI message for the current layer. Setting fg_characteristics_persistence_flag equal to 0 may specify that the film grain characteristics SEI message applies to the current decoded picture (e.g., only the current decoded picture). Setting fg_characteristics_persistence_flag equal to 1 may specify that the film grain characteristics SEI message applies to the current decoded picture and persists for subsequent pictures (e.g., all subsequent pictures) of the current layer (e.g., in output order), for example, until one or more of the following conditions are true: a new CLVS of the current layer begins; the bitstream ends; and/or a picture in the current layer in an AU (e.g., associated with a film grain characteristics SEI message) is output that follows the current picture in output order.

In another video coding technique, e.g., AV1, different metadata may be sent. For example, to reconstruct a film grain at the decoder side, the encoder/pre-processing module may send one or more of the following parameters to the decoder: lag value L (e.g., a value between 0 and 3 that defines the number of auto regressive coefficients used), auto regressive coefficients (e.g., {*a*₀, ..., *aₙ*}), a set of points for a piece-wise linear scaling function for a color component (e.g., each color component), and/or values bCb , dCb , hCb , bCr , dCr , hCr (e.g., for a look-up table index of chroma components).

The values (e.g., all values) may be signaled as (e.g., quantized) integers. The values may take a relatively low amount of bandwidth (e.g., compared to the coded video, for example, at higher resolutions). The film grain parameters may be signaled for the highest (e.g., display) resolution of the reconstructed video frames, although the video coding technique may support varying frame resolution.

The parameters may take up to 145 bytes (e.g., including 64 bytes for scaling functions and 74 bytes for AR coefficients). The parameters may be signaled (e.g., once, until later updated, or for every frame, if necessary). Sending parameters for every frame may help to maintain temporal consistency (e.g., when film grain characteristics are changing gradually).

Another example specification is provided herein. For example, a user data SEI message (e.g., registered by ITU-T Recommendation T.35) may be defined. The user data SEI message may be inefficient for the use case(s) described herein.

In an example, the already present encoding information, in some video coding techniques, may be used to synthesize film grain. For example, the level of intensity per region (e.g., which is needed to adapt the grain intensity) may come from the block partitioning. The level of intensity per region may be available (e.g., directly) from the DC(0,0) coefficient. Different flags or characteristics of the coding units (CUs) may give information on the level of texture present in each CU. For example, the flags and/or characteristics may indicate: the bit per pixel cost per CU; the CU block size; CBF for a (e.g., each) CU; and/or the like.

A film grain style vector may be transmitted and used for film grain synthesis. The style vector may be transmitted in the film grain characteristics SEI message or in another SEI message. In this case, the transmitted style vector may be seen as a whole. For example, information related to which part of the style vector corresponds to which characteristic or property of the film grain may not be described and/or transmitted.

In some examples, the characteristics of film grain in the video chain may not be conveyed under a style vector for use during synthesis.

Feature(s) described herein may be (e.g., directly) embedded in the codecs. These features may be (e.g., may need to be) computationally inexpensive (e.g., at the expense of a low modeling capacity). Compression-oriented techniques may suffer from drawbacks (e.g., several additional drawbacks). For example, the accuracy of film grain modeling may be related to filtering and/or edge detection. In this case, insufficient filtering may cause the presence of grain in the denoised image. The grain image (e.g., the difference between the grainy and grain-free images) may not be representative of the true distribution and intensity of the grain.

Poor edge detection may result in biased scaling. Undetected edges may cause the textured blocks to be considered flat and homogeneous. In this case, the high frequency of the undetected edges may be mixed up with that of the grain. Considering homogeneous blocks (e.g., only homogeneous blocks) in the analysis may fail to address the grain properties in textured regions that are different (e.g., resulting in a less accurate synthesis). The grain properties supported by the film grain SEI message may be limited (e.g., resulting in a poor and limited diversity). As described herein, the transmitted information related to the grain characteristics may include: grain model type (e.g., filtering, auto-regressive), blending mode on original content (e.g., addition, multiplication), scale factor to apply on grain characteristics, distinction between colored grain or gray level grain, intensity intervals on which different grain intensity may be applied, scaling factors for content intensity intervals, and/or the like.

A film grain style vector may be generated that may be further used for film grain synthesis. The style vector may offer one or more advantages (e.g., being compact and richer than other formats). The style vector may be modeled in a richer manner (e.g., with respect to the grain properties used by content creators). For example, film grain may be adapted in terms of size and pattern of the grain and/or in terms of intensity and color. The film grain may be content-dependent (e.g., because the film grain adapts to the local intensity, texture and saturation of the original content). Grain characteristics may be grouped in a style vector (e.g., a compact representation that is complex enough to include the properties of the grain). During analysis, the style vector may be generated by considering (e.g., exclusively considering) the grainy image. This may be different from other techniques with no pre-processing (e.g., denoising, edge detection).

During synthesis, the generated film grain may be adapted in terms of size and pattern of the grain and/or in terms of intensity and color. The film grain may be content-dependent (e.g., as it adapts to the local intensity, texture and saturation of the original content).

The transmitted style vector may be seen as a whole. For example, the different characteristics and properties describing film grain may not be disentangled inside this vector. In this case, one or more specific characteristics may not be modulated/adapted at the decoder side (e.g., to change and adapt the type of grain). The style vector may not be linked to the (e.g., existing) parameters describing film grain.

A style vector may be transmitted (e.g., within the encoded bit-stream). The transmission may include the style vector and information derived from the disentanglement of the style vector into different properties and grain characteristics (e.g., for film grain modeling and synthesis). Transmitted information may be related to the use of the style vector (e.g., in a modulated manner per characteristic in comparison with the genuine use of style vector, or through the existing synthesis in existing codecs).

Feature(s) associated with providing a disentangled style vector are provided herein. Metadata (e.g., additional metadata) related to this disentanglement may be included (e.g., to explain how the properties of film grain are organized in the style vector). This information may be included in the bitstream at the encoder side. At the receiver side, the decoder or the device may modulate characteristic(s) of the style vector and/or translate the characteristics into characteristics implemented in the codec.

Metadata related to the synthesis of film grain at the decoder side may be transmitted. The metadata may include a style vector that includes characteristics (e.g., all characteristics) used to (e.g., needed to) define the style of film grain that is present in the original content. Information about how these characteristics are organized and disentangled in the style vector may be provided (e.g., specified as syntax elements in an SEI message). The information about the style characteristics may be found in different parts, subparts, sub-subparts, etc., of the style vector. For example, the information may be attached with a specific label different from one characteristic to another.

The granularity of the signaled metadata may be based on: time (e.g., data is signaled per period/duration of the video content); temporal layers (e.g., data is signaled per temporal layer); slice type (e.g., intra and inter slices); parts of the picture (e.g., slices, tiles, sub-pictures); and/or the like.

The SEI message may be generated at the encoder (e.g., from information provided by the processing block responsible for the analysis of the film grain). The encoder may signal this information in the SEI message. The SEI message may be decoded by the decoder. The decoded SEI message may be passed on to the processing block that will synthesize back film grain on the decoded content. Feature(s) described herein may be applicable to the encoder and decoder. The encoder may signal film grain-related metadata into the bitstream. The decoder may decode the metadata.

Examples of metadata syntax and semantics are provided herein (e.g., in the shape of an SEI message). A film grain style vector and metadata (e.g., related to how characteristics of film grain are organized inside the style vector) may be signaled. Metadata related to synthesizing film grain at the decoder side is described herein. The film grain synthesis may rely on a style vector that describes the characteristics of the film grain to be synthesized. The style vector may represent the grain characteristics (e.g., to ensure maximum fidelity to the original grain). The style vector may be disentangled into separate film grain characteristics. This may enable a specific modulation during synthesis of the style vector against one or more specific grain properties and a direct mapping with existing film grain metadata in current codecs or specifications. The style vector may be disentangled into parts, subparts, and/or sub-subparts (e.g., each corresponding to specific categories of characteristics, or characteristics themselves, if no category is used or needed) that define the style vector (e.g., defined by their respective labels).

The granularity for signaling the accompanying metadata in SEI messages may be at different levels. For example, a first granularity level (e.g., Granularity 1) may be based on time (e.g., data is signaled per period/duration of the video content). A second granularity level (e.g., Granularity 2) may be based on temporal layers. A third granularity level (e.g., Granularity 3) may be based on slice type (e.g., intra and inter slices). A fourth granularity level (e.g., Granularity 4) may be based on the picture. A fifth granularity level (e.g., Granularity 5) may be based on parts of the picture (e.g., slices, tiles, sub-pictures, etc.)

Table 1 illustrates an example of the SEI message and the accompanying metadata for the synthesis of film grain through a disentangled style vector. In another example the accompanying metadata and the disentangled style vector for the synthesis of film grain through a disentangled style vector may be inserted in a Film Grain Characteristics SEI message in a video coding technique.

A style vector or metadata may be sent globally for the full bitstream. For example, style vector or the metadata may be shared for frames of the decoded video. The style vector or the metadata may be shared in a period. The period may correspond to a picture, an intra period, a group of pictures (GOP), a number of pictures, a time duration, and/or for all frames. The SEI message may be inserted per period. is the SEI message may be transmitted at the start of an upcoming period. The next SEI message (e.g., including style vector or the metadata) may be transmitted at the start of the next upcoming period. If the upcoming period is a picture, a message may be transmitted for each picture. If the upcoming period is a specified time interval or a specified number of pictures, the associated message may be transmitted with the first picture in the time interval or with the first picture in the specified number of pictures.

Part of the information may be sent (e.g., globally) for the full bitstream (e.g., information related to the number of parts or subparts in the style vector if the information is identical for all style vectors in the bitstream) and other information (e.g., another part of the information) may be sent with a different periodicity (e.g., for each picture).

Metadata may include one or more of the following elements/flags.

The fg_st_cancel_flag may indicate that the SEI message cancels the persistence of any previous film grain style vector information SEI message in output order.

The fg st_global flag may indicate whether the information (e.g., all or part the following information data) is redefinable for a (e.g., each) style vector or not.

fg_st_vector_size may indicate the dimension of the transmitted style vectors.

fg_st_vector_number may indicate the number of style vectors included in the metadata. More than one style vector may be sent. For example, more than one style vector may be applied successively on the decoded content during successive syntheses. In this case, the different style vectors may be used in the order defined by their number, i. In another example, a (e.g., one) style vector may be defined per part of an image (e.g., and several style vectors may be defined).

fg_st_vector[ i ] may represent a style vector for a given film grain style to be applied to the decoded picture.

fg_st_disentangle_flag[ i ] may indicate whether the style vector of index i is disentangled or not.

fg_st_number_of_parts[ i ] may indicate the number of separate and disentangled parts in the style vector of index i.

fg_st_bits_per_part[ i ][ j ] may indicate the number of bits in the disentangled part of index j for the style vector of index i.

fg_st_part_label_idc[ i ][ j ] may indicate the label of the disentangled part of index j for the style vector of index i. This label may identify the type of characteristics stored in the part of index j. The type may be a characteristic (e.g., the grain size) or a category of characteristics (e.g., content-based characteristics).

fg_st_subpart_flag[ i ][ j ] may indicate whether some subparts for the disentangled part of index j for the style vector of index i are to be considered.

fg_st_number of_subparts[ i ][ j ] may indicate the number of subparts in the disentangled part of index j for the style vector of index i.

fg_st_bits_per_subpart[ i ][ j ][ k ] may indicate the number of bits in the subpart of index k of the disentangled part of index j for the style vector of index i.

fg_st_subpart_label_idc[ i ][ j ][ k ] may indicate the label of the subpart of index k of disentangled part of index j for the style vector of index i. This label may identify the type of characteristics stored in the subpart of index k. The type may be a characteristic (e.g., the grain size) or a category of characteristics (e.g., content-based characteristics).

**Table 1: Example syntax**

| Syntax | |
|---|---|
| film_grain style vector info ( payloadSize ) { | Descriptor |
| fg_st_cancel_flag | u(1) |
| if ( !fg_st_cancel_flag ) { | |
| fg st_global flag | u(1) |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) . |
| } | |
| if ( !fg_st_global_flag ) or ( i ==0 ) { | |
| fg_st_disentangle_flag[ i ] | u(1) |
| if ( fg_st_disentangle_flag[ i ] ) { | |
| fg_st_number_of_parts[ i ] | u(4) |
| for (j = 0; j < fg_st_number_of_parts[ i ]; j++ ) { | |
| fg_st_bits_per_part[ i ][ j ] | u(4) |
| fg_st_part_label_idc[ i ][ j ] | u(4) |
| fg_st_subpart_flag[ i ][ j ] | . u(1) |
| if ( fg_st_subpart_flag[ i ][ j ] ) { | |
| fg_st_number_of_subparts[ i ][ j ] | u(4) |
| for ( k = 0; k < | |
| fg_st_number_of_subparts[ i ][ j ]; k++ ) { | |
| fg_st_bits_per_subpart[ i ][ j ][ k ] | u(4) |
| fg_st_subpart_label_idc[ i ][ j ][ k ] | u(4) |
| } | |
| } | |
| } | |
| } | |
| } | |
| } | |
| } | |
| } | |

A disentangled style vector may allow different numbers of bits to be allocated depending on the characteristics and/or the categories of characteristics. The disentangled style vector may be used to identify and change a (e.g., one) characteristic (e.g., independently of the others). For example, the grain shape may be changed (e.g., independently of its size), and without modifying the repartition of grain depending on the content saturation, intensity, or texture.

The style vector may be modulated (e.g., before being used in the synthesis) by masking (e.g., if the style vector is disentangled). The style vector may be modulated(e.g., through bitwise addition) by a (e.g., an additional) style vector. The additional style vector may be either signaled or defined in the end device. In some examples, one or more (e.g., additional) level(s) of subparts may be added.

In some examples, an (e.g., one) SEI message may be sent per style vector. If an (e.g., one) SEI message is sent per style vector, the syntax in Table 1 may be modified as shown in Table 2.

**Table 2: Example syntax**

| Syntax | |
|---|---|
| film_grain_style_vector_info ( payloadSize ) { | Descriptor |
| fg_st_cancel_flag | u(1) |
| if ( !fg_st_cancel_flag ) { | |
| fg_st_vector_size | u(4) |
| for (j=0; j < fg_st_vector_size; j++){ | |
| fg_st_vector[ j ] | u(8) |
| } | |
| fg_st_disentangle_flag | |
| if ( fg_st_disentangle_flag ){ | |
| fg_st_number_of_parts | u(4) |
| for ( j = 0; j < fg_st_number_of_parts; j++ ) { | |
| fg_st_bits_per_part[ j ] | u(4) |
| fg_st_part_label_idc[ j ] | u(4) |
| fg_st_subpart_flag[ j ] | u(1) |
| if (fg_st_subpart_flag[ j ] ) { | |
| fg_st_number_of_subparts[ j ] | u(4) |
| for ( k = 0; k < fg_st_number_of_subparts[ j ]; k++ ) { | |
| fg_st_bits_per_subpart[ j ][ k ] | u(4) |
| fg_st_subpart_label_idc[ j ][ k ] | u(4) |
| } | |
| } | |
| } | |
| } | |
| } | |
| } | |

In this case, the metadata fg st_global flag, fg_st_vector_number are no more needed. The encoding process may be the same or similar to what is shown in FIG. 7.

In some examples, fg st_global flag may not be used. If fg st_global flag is not used, the metadata (e.g., all metadata) may be sent for style vectors (e.g., all style vectors) in fg_st_vector_number. In this case, the syntax may be modified as shown in Table 3.

**Table 3: Example syntax**

| Syntax | |
|---|---|
| film_grain style vector info ( payloadSize ) { | Descriptor |
| fg_st_cancel_flag | u(1) |
| if ( !fg_st_cancel_flag ) { | |
| fg_st_aggregation_model | u(4) |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| fg_st_disentangle_flag[ i ] | u(1) |
| if ( fg_st_disentangle_flag[ i ] ) { | |
| fg_st_number_of_parts[ i ] | u(4) |
| for ( j = 0; j < fg_st_number_of_parts[ i ]; j++ ) { | |
| fg_st_bits_per_part[ i ][ j ] | u(4) |
| fg_st_part_label_idc[ i ][ j ] | u(4) |
| fg_st_subpart_flag[ i ][ j ] | u(1) |
| if ( fg_st_subpart_flag[ i ][ j ] ) { | |
| fg_st_number_of_subparts[ i ][ j ] | u(4) |
| for ( k = 0; k < fg_st_number_of_subparts[ i ][ j ]; k++ ) { | |
| fg_st_bits_per_subpart[ i ][ j ][ k ] | u(4) |
| fg_st_subpart_label_idc[ i ][ j ][ k ] | u(4) |
| } | |
| } | |
| } | |
| } | |
| } | |
| } | |
| } | |

In some examples, the style vectors (e.g., only the style vectors) may be sent. A default mode may be defined. For example, the following default values may be used. These values may persist (e.g., for the whole bitstream). In this case, only the following style vector(s) may be sent:
fg_st_vector_size = 8
fg st_global flag = 1
fg_st_disentangle_flag[i] = 0
fg_st_number_of_parts[ i ] = 5
fg_st_bits_per_part[ i ][ 0 ] = 1
fg_st_bits_per_part[ i ][ 1 ] = 1
fg_st_bits_per_part[ i ][ 2 ] = 2
fg_st_bits_per_part[ i ][ 3 ] = 2
fg_st_bits_per_part[ i ][ 4 ] = 2
fg_st_part_label_idc[ i ][ 0 ] =0.
fg_st_part_label_idc[ i ][ 1 ] = 1.
fg_st_part_label_idc[ i ][ 2 ] = 2.
fg_st_part_label_idc[ i ][ 3 ] = 4.
fg_st_part_label_idc[ i ][ 4 ] = 5.
fg_st_subpart_flag[ i ][ j ] =0 (e.g., by default, no subparts are considered).

In this case, the syntax may be modified as shown in Table 4:

**Table 1: Example syntax**

| Syntax | |
|---|---|
| film_grain_style_vector_info ( payloadSize ) { | Descriptor |
| fg_st_cancel_flag | u(1) |
| if ( !fg_st_cancel_flag ) { | |
| fg_st_vector_number | u(4) |
| for (i=0;i<fg_st_vector_number;i++) { | |
| for ( j=0; j < fg_st_vector_size; j++){ | |
| fg_st_vector[ i ][ j ] | u(8) |
| } | |
| } | |
| } | |
| } | |

The vector size(s) may be sent with the style vectors.

In some examples, a (e.g., one single) bitfield may be used. The (e.g., single) bitfield fg_st_flags may be used to convey several information flags. For example, bit 0 may indicate that the SEI message cancels the persistence of any previous style vector information SEI message in output order. This bit may correspond to the previously defined fg_st_cancel_flag. Bit 1 may indicate whether the following information (e.g., all or part of the following information data) in the message is redefinable for each style vector or not. This bit may correspond to the previously defined fg st_global flag. Bit 2 may indicate whether the style vector is able to be disentangled in terms of style characteristics or style categories. This bit may correspond to the previously defined fg_st_disentangle_flag. Bit 3 may indicate whether a part of the style vector (e.g., itself) is able to be disentangled in terms of style characteristics or style categories. This bit may correspond to the previously defined fg_st_subpart_flag. Bits 4-8 may be reserved (e.g., for future use).

**Table 5: fg_st_flags description**

| bit 4-8 | bit 3 | bit 2 | bit 1 | bit 0 |
|---|---|---|---|---|
| Future use | fg_st_subpart_flag | fg_st_disentangle_flag | fg_st_global_flag | fg_st_cancel_flag |

The meaning of each bit in the bitfield fg_st_flags is summarized in Table 5.

The fg_st_flags flag may reduce the size of the SEI message (e.g., by not sending the metadata information that is not needed to use the style vector). In this case, the syntax in Table 1 may be modified as illustrated in Table 6.

**Table 6: Example syntax**

| Syntax | |
|---|---|
| film_grain_style_vector_info ( payloadSize ) { | Descriptor |
| fg_st_flag | u(1) |
| if ( fg_st_flags && 0x01 != 0x01 ) { | |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| if ( fg_st_flags && 0x02 != 0x02 ) or ( i == 0 ) { | |
| if ( fg_st_flags && 0x04 == 0x04 ) { | |
| fg_st_number_of_parts[ i ] | u(4) |
| for (j = 0; j < fg_st_number_of_parts[ i ]; j++ ) { | |
| fg_st_bits_per_part[ i ][ j ] | u(*) |
| fg_st_part_label_idc[i][j] | u(*) |
| if (( fg_st_flags && 0x10 == 0x10) { | |
| fg_st_number_ot_subparts[ i ][ j ] | u(*) |
| for ( k = 0; k < | |
| fg_st_number_of_subparts[ i ][ j ]; k++ ) { | |
| fg_st_bits_per_subpart[ i ][j][k] | u(*) |
| fg_st_subpart_label_idc[ i ][ j ][ k ] | u(*) |
| } | |
| } | |
| } | |
| } | |
| } | |
| } | |
| } | |

Examples of metadata are provided herein. For example, fg_st_cancel_flag equal to 1 may indicate that the SEI message cancels the persistence of a (e.g., any) previous film grain style vector information SEI message in output order. This flag may reset the use of a style vector (e.g., no more film grain synthesis is done). Setting fg_st_cancel_flag equal to 0 may indicate that film grain style vector information parameters follow (e.g., remain the same).

fg_st_vector_number may specify the number of style vectors in the CVS. Setting fg st_global flag equal to 0 may indicate that fg_st_disentangled_flag[ i ], fg_st_number_of_parts[ i ], fg_st_bits_per_part[ i ], fg_st_part_labe_idc[ i ], fg_st_subpart_flag[ i ][ j ], fg_st_number_of_subparts[ i ][ j ], fg_st_bits_per_subpart[ i ][ j ], fg_st_subpart_label_idc[ i ][ j ], fg_st_subsubpart_flag[ i ][ j ][ k ], fg_st_number_of_subsubparts[ i ][ j ][ k ], fg_st_bits_per_subsubpart[ i ][ j ][ k ], fg_st_subsubpart_label_idc[ i ][ j ][ k ] for i=0.. fg_st_vector_number are present.

Setting fg_st_global_flag equal to 1 may indicate that (e.g., only) fg_st_disentangled_flag[ 0 ], fg_st_number_of_parts[ 0 ], fg_st_bits_per_part[ 0 ], fg_st_part_label_idc[ 0 ], fg_st_subpart_flag[ 0 ][ j ], fg_st_number_of_subparts[ 0 ][ j ], fg_st_bits_per_subpart[ 0 ][ j ], fg_st_subpart_label_idc[ 0 ][ j ], fg_st_subsubpart_flag[ 0 ][ j ][ k ], fg_st_number_of_subsubparts[ 0 ][ j ][ k ], fg_st_bits_per_subsubpart[ 0 ][ j ][ k ], fg_st_subsubpart_label_idc[ 0 ][ j ][ k ]are present.

fg_st_vector_size may specify the size of the style vector(s) (e.g., in a number of bits).

fg_st_vector[ i ] may specify the style vector of index i and of size fg_st_vector_size, which gives the style characteristics of the film grain style to be synthesized on the corresponding decoded picture. If the style vector is disentangled, a (e.g., each) set of bits (e.g., potentially only one) may correspond to a (e.g., one) style characteristic.

fg_st_disentangle_flag[ i ] may specify whether the style vector of index i includes disentangled style characteristics.

fg_st_number_of_parts[ i ] may indicate the number of separate and disentangled parts in the style vector of index i.

fg_st_bits_per_part[ i ][ j ] may indicate the number of bits in the disentangled part of index j for the style vector of index i.

fg_st_part_label_idc[ i ][ j ] may indicate the label of the disentangled part of index j for the style vector of index i. If fg_st_subpart_flag[ i ][ j ] equals 0, this label may indicate the type of characteristics stored in the part of index j. If fg_st_subpart_flag[ i ][ j ] does not equal 0, this label may indicate the type of characteristic categories stored in the part of index j.

Setting fg_st_part_label_idc[ i ][ j ] equal to 0 may specify that the characteristic stored in the part of index j is of type grain size (e.g., if fg_st_subpart_flag[ i ][ j ] equals 0). If fg_st_subpart_flag[ i ][ j ] does not equal 0, this label may indicate that the category of the characteristic stored in the part of index j is of type grain characteristic.

Setting fg_st_part_label_idc[ i ][ j ] equal to 1 may specify that the characteristic stored in the part of index j is of type grain shape (e.g., if fg_st_subpart_flag[ i ][ j ] equals 0). If fg_st_subpart_flag[ i ][ j ] does not equal 0, this label may specify that the category of the characteristic stored in the part of index j is of type content characteristic.

Setting fg_st_part_label_idc[ i ][ j ] equal to 2 may specify that the characteristic stored in the part of index j is of type content intensity (e.g., if fg_st_subpart_flag[ i ][ j ] equals 0). If fg_st_subpart_flag[ i ][ j ] is not equal 0, this label may specify that the category of the characteristic stored in the part of index j is of type color component.

Setting fg_st_part_label_idc[ i ][ j ] equal to 3 may specify that the characteristic stored in the part of index j is of type content saturation (e.g., if fg_st_subpart_flag[ i ][ j ] equals 0). If fg_st_subpart_flag[ i ][ j ] does not equal 0, this label may specify that the category of the characteristic stored in the part of index j is of proprietary type.

Setting fg_st_part_label_idc[ i ][ j ] equal to 4 may specify that the characteristic stored in the part of index j is of type content texture (e.g., if fg_st_subpart_flag[ i ][ j ] equals 0). If fg_st_subpart_flag[ i ][ j ] does not equal 0, it may be reserved for future use.

Setting fg_st_part_label_idc[ i ][ j ] equal to 5 may specify that the characteristic stored in the part of index j is of type content intensity interval (e.g., if fg_st_subpart_flag[ i ][ j ] equals 0). If fg_st_subpart_flag[ i ][ j ] does not equal 0, it may be reserved for future use.

Setting fg_st_part_label_idc[ i ][ j ] equal to 6 may specify that the characteristic stored in the part of index j is of proprietary type (e.g., if fg_st_subpart_flag[ i ][ j ] equals 0). If fg_st_subpart_flag[ i ][ j ] does not equal 0, it may be reserved for future use.

**Table 7: Example interpretation of fg_st_part_label_idc, if fg_st_subpart_flag[ i ][ j ] equals 0**

| **fg_st_part_label_idc( i ][ j ]** | **Type of category for characteristic** |
|---|---|
| 0 | Grain characteristic |
| 1 | Content characteristic |
| 3 | Color component |
| 4 | Proprietary characteristic |
| 5..15 | Reserved for future uses |

**Table 8: Example interpretation of fg_st_part_label_idc, if fg_st_subpart_flag[ i ][ j ] does not equal 0**

| **fg_st_part_label_idc( i ][ j ]** | **Type of characteristic** |
|---|---|
| 0 | Grain size |
| 1 | Grain shape |
| 2 | Content Intensity |
| 3 | Content saturation |
| 4 | Content texture |
| 5 | Content intensity interval |
| 6 | Proprietary type |
| 7..15 | Reserved for future uses |

fg_st_subpart_flag[ i ][ j ] may indicate whether some subpart(s) for the disentangled part of index j for the style vector of index i are to be considered.

fg_st_number of_subparts[ i ][ j ] may indicate the number of subpart(s) in the disentangled part of index j for the style vector of index i

fg_st_ bits_per_subpart[ i ][ j ][ k ] may indicate the number of bits in the subpart of index k of the disentangled part of index j for the style vector of index i.

fg_st_subpart_label_idc[ i ][ j ][ k ] may indicate the label of the subpart of index k of disentangled part of index j for the style vector of index i. This label may indicate the type of characteristic stored in the subpart of index k.

fg_st_subpart_label_idc[ i ][ j ][ k ] equal to 0 may indicate that the characteristic stored in the subpart of index k in the part of index j is of type grain shape.

fg_st_subpart_label_idc[ i ][ j ][ k ] equal to 1 may indicate that the characteristic stored in the subpart of index k in the part of index j is of type grain size.

fg_st_subpart_label_idc[ i ][ j ][ k ] equal to 2 may indicate that the characteristic stored in the subpart of index k in the part of index j is of type content intensity.

fg_st_subpart_label_idc[ i ][ j ][ k ] equal to 3 may indicate that the characteristic stored in the subpart of index k in the part of index j is of type content saturation.

fg_st_subpart_label_idc[ i ][ j ][ k ] equal to 4 may indicate that the characteristic stored in the subpart of index k in the part of index j is of type content texture.

fg_st_subpart_label_idc[ i ][ j ][ k ] equal to 5 may indicate that the characteristic stored in the subpart of index k in the part of index j is of type content intensity interval.

fg_st_subpart_label_idc[ i ][ j ][ k ] equal to 6 may indicate that the characteristic stored in the subpart of index k in the part of index j is of proprietary type.

**Table 9: Interpretation of fg_st_subpart_label_idc.**

| **fg_st_subpart_label_idc( i ][ j ][ k** ] | Type of characteristic |
|---|---|
| 0 | Grain shape |
| 1 | Grain size |
| 2 | Content intensity |
| 3 | Content saturation |
| 4 | Content texture |
| 5 | Content intensity interval |
| 6 | Proprietary type |
| 7..15 | Reserved for future use |

If a (e.g., an additional) level of subparts is to be added, the level may correspond to one or more of the following semantics.

fg_st_subsubpart_flag[ i ][ j ][ k ] may indicate whether some sub-subpart(s) for the disentangled sub part of index k of the part of index j for the style vector of index i are to be considered.

fg_st_number of_subsubparts[ i ][ j ][ k ] may indicate the number of sub-subpart(s) in the disentangled subpart of index k of the part of index j for the style vector of index i

fg_st_ bits_per_subsubpart[ i ][ j ][ k ][ l ] may indicate the number of bits in the sub-subpart of index I of the subpart of index k of the disentangled part of index j for the style vector of index i.

fg_st_subsubpart_label_idc[ l ][ j ][ k ][ l ] may indicate the label of the sub-subpart of index I of the subpart of index k of disentangled part of index j for the style vector of index i. This label may identify the type of characteristics stored in the sub-subpart of index I of the subpart of index k.

fg_st_subsubpart_label_idc[ i ][ j ][ k ][ l ] equal to 0 may indicate that the characteristic stored in the sub-subpart of index I in the subpart of index k in the part of index j is of type model value.

fg_st_subsubpart_label_idc[ i ][ j ][ k ][ l ] equal to 1 may indicate that the characteristic stored in the sub-subpart of index I of the subpart of index k in the part of index j is of proprietary type.

**Table 10: Example interpretation of fg_st_subsubpart_label_idc**

| **fg_st_subsubpart_label_idc( i ][ j ][ k ][ l ]** | **Type of characteristic** |
|---|---|
| 0 | Model value |
| 1 | Proprietary type |
| 2..15 | Reserved for future use |

"Reserved for future use" may indicate that (e.g., additional) values of a type of metadata may be used and defined in the future for some other use than the ones described herein. "Proprietary type" may indicate that this value of a metadata is used to specify a process, method, or use that corresponds to a proprietary type (e.g., as defined internally by an entity/organization/company/client/device, etc.).

An encoder (e.g., in a video encoding device) may generate the metadata. The metadata may be generated while the style vector(s) are computed (e.g., at the encoder side).

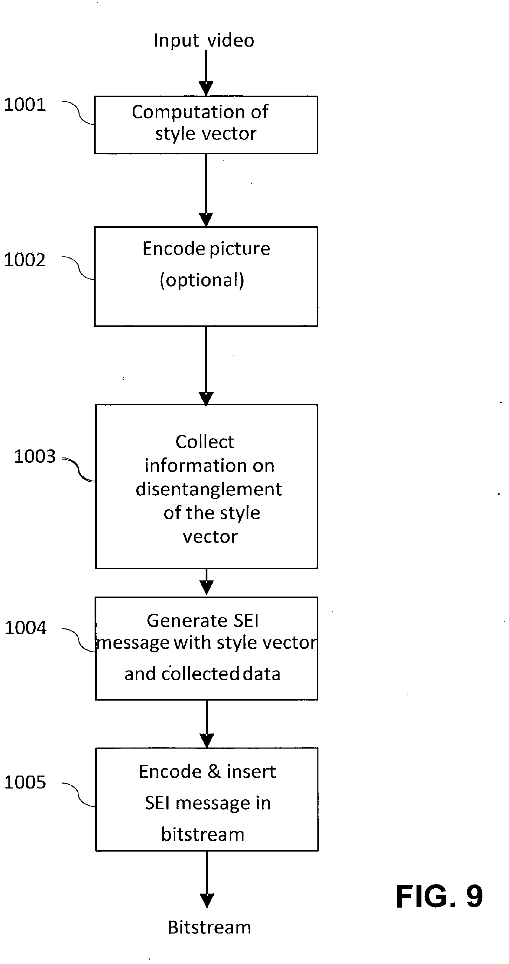

FIG. 9 illustrates a block diagram of the SEI message generation and bitstream encapsulation (e.g., performed during the encoding). The SEI message may be inserted for a given picture (e.g., the considered period corresponds to one picture). At 1001, the style vector corresponding to the film grain contained in the picture to encode may be computed through the analysis of the picture to encode. At 1002, the encoding of the picture may be performed. Encoding of the picture may be optional. At 1003, data related to the disentanglement of the style vector may be collected (e.g., information about the split of the style vector(s) into parts, subparts, sub-subparts, etc. and their corresponding labels and sizes). At 1004, an SEI message may be generated. The SEI message may include the style vector and the accompanying information. At 1005, the SEI message may be encoded and inserted in the bitstream.

The order of the actions described in FIG. 9 may be changed (e.g., the actions at 1003 and/or 1004 may be performed before the picture is encoded at 1002). Other orderings may be used. One or more (e.g., several) style vectors may be computed for different parts of the image.

A style vector computed from an image (e.g., an image other than the one used for the film grain analysis) may be computed and inserted in the SEI message. The style vector corresponding to the image used for film grain analysis and another style vector (e.g., coming from another image) may be inserted in the SEI message.

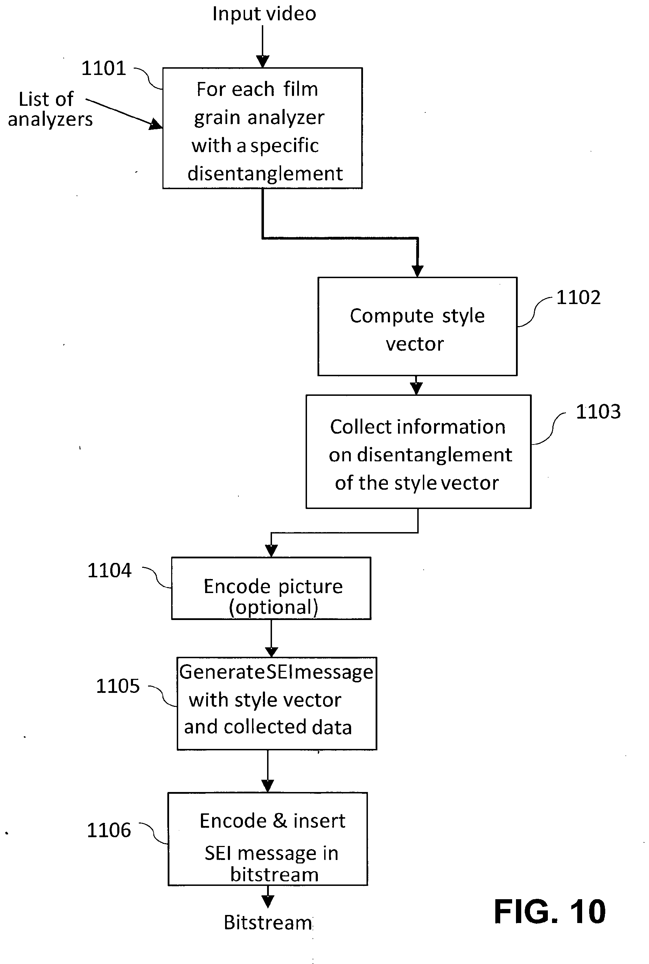

One or more (e.g., several) style vectors may be computed with different disentanglements (e.g., from different film grain analyzers) and inserted into the SEI message. FIG. 10 illustrates an encoder-side workflow if more than one grain analyzer with different disentanglements are used.

At 1101, a loop may be performed on a given list of film grain analyzers with different disentanglements. At 1102, for a grain analyzer with a given disentanglement, the style vector corresponding to the picture may be computed. At 1103, data associated with disentanglement may be collected (e.g., information about the split of the style vector(s) into parts, subparts, sub-subparts, etc., and their corresponding labels and sizes). At 1104, if the data (e.g., all data) is collected, the encoding of the picture may be performed. Encoding of the picture may be optional. At 1105, an SEI message may be generated. The SEI message may include the collected metadata. The SEI message may be encoded and inserted in the bitstream at 1106. The ordering of some of the actions described in FIG. 10 may be changed. For example, an SEI message may be inserted per style vector (e.g., inside the loop on grain analyzers).

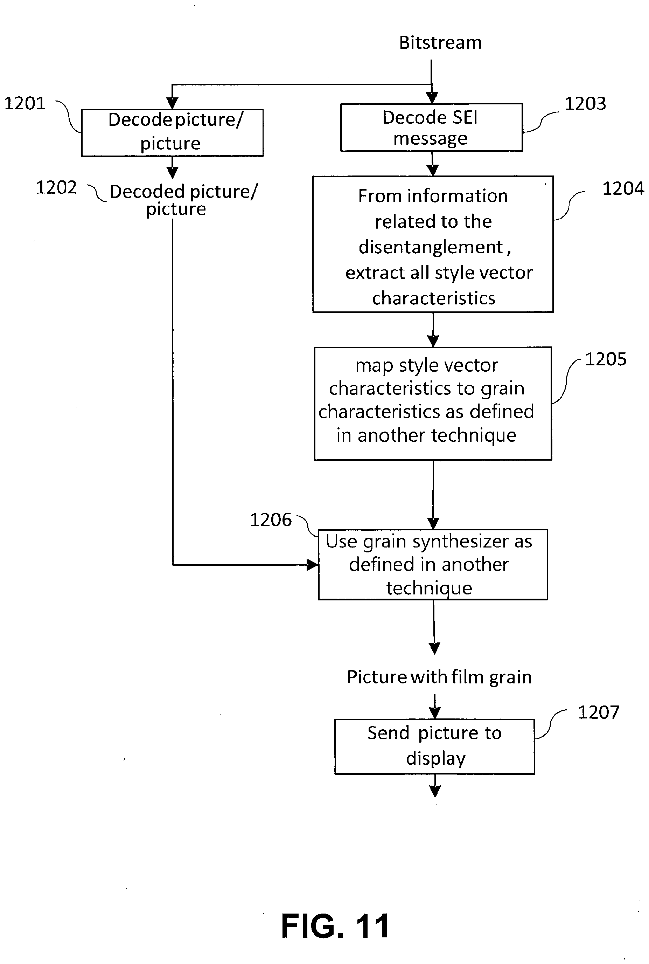

The metadata may be used. The style vector and its associated metadata may be used. FIG. 11 illustrates an example block diagram of the SEI message usage at the decoder. FIG. 11 illustrates decoding and use of a disentangled style vector as a container of film grain characteristics during film grain synthesis.

The usage of the style vector may be guided by the accompanying metadata related to its disentanglement. In this case, the characteristics present in the style vector may be mapped, thanks to the disentanglement, to the existing characteristics in current definition of film grain characteristics in a video coding technique (e.g., MPEG Film Grain Characteristics). These characteristics may be extended to other codecs.

At 1201, the picture may be decoded from the bitstream. The picture may be produced as a decoded picture 1202. Decoding of the picture may be optional. In examples, the picture may be obtained (e.g., directly obtained from the bitstream, or from another bitstream or from another source) At 1203, the SEI message data (e.g., including information related to the disentanglement of the style vector(s)) and the style vector(s) may be retrieved/collected from the bitstream for a picture or a group of pictures. From this collected information, at 1204, the different disentangled characteristics may be extracted from the style vector. At 1205, a style vector characteristic (e.g., each style vector characteristic) may be mapped to a (e.g., each) characteristic of the film grain in the video coding technique. At 1206, a film grain synthesizer corresponding to the video coding technique may be used with the mapped characteristics to generate film grain on the picture 1202. Optionally, the picture with generated film grain may be sent to the display at 1207.

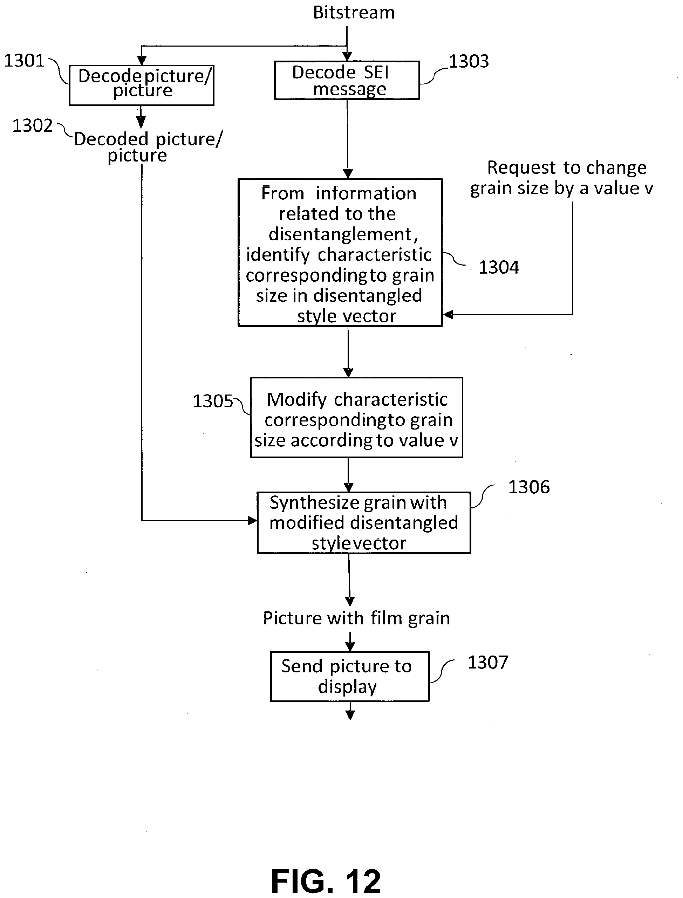

FIG. 12 illustrates an example of use of a disentangled style vector. FIG. 12 illustrates decoding and use of the disentangled style vector and associated information at the receiver side. In this example, a (e.g., only one) style vector disentangled into subparts (e.g., only sub-parts) and a (e.g., one specific) label/characteristic corresponding to, for example, the grain size, are used. In some examples, a plurality of style vectors, subparts, and/or sub-subparts (e.g., and labels and/or characteristics) may be used in a similar manner. At 1301, the picture may be decoded from the bitstream, producing a picture 1302. Decoding of the picture may be optional. In examples, the picture may be obtained (e.g., directly obtained from the bitstream, or from another bitstream, or from another source). At 1303, the SEI message data including the information related to the disentanglement of the style vector(s) and the style vector(s) may be retrieved from the bitstream for a picture or a group of pictures. At 1304, from the information related to the disentanglement of the style vector(s) (e.g., upon a request to change for example the grain size by a value v), the characteristic corresponding to the grain size in the disentangled style vector may be identified. At 1305, the corresponding characteristic may be modified by the value v. At 1306, the grain may be synthesized on the picture 1302 (e.g., using the disentangled and modified style vector). Optionally, the generated picture with film grain may be sent to the display at 1307.

The actions at 1007, 1107, 1207, and/or 1307 (e.g., and after) may be realized in a decoder, a player, a display, and/or the like.

The use of the style vector may be disabled for some content pictures. For example, use of the style vector may be disabled depending on: the image category (e.g., sport images, gaming images, etc.), the display settings (e.g., cinema mode, etc.), and/or the like.

The use of the style vector may be disabled under one or more conditions (e.g., for some additional constraints) from the end device (e.g., low level of energy, energy profile from the user that prevents using such a process, etc.).

The style vector characteristics may be modified (e.g., depending on constraints from the end device, for example, low level of energy, energy profile from the user that prevents using such a process, etc.).

The described signaling mechanism may enable video encoders/decoders to identify and modify a (e.g., each) characteristic in the style vector (e.g., independently).

The described signaling mechanism may enable video encoders/decoders to identify and map a (e.g., each) characteristic in the style vector with (e.g., existing) grain characteristics in film grain, e.g., in a video coding technique (e.g., AVC, VVC, HEVC, AV1).

The described signaling mechanism may carry the grain characteristics in a compact manner through a style vector.

Feature(s) described herein may be implemented at the encoder and the decoder.

The presence of the dedicated accompanying SEI message (e.g., including a style vector) may be checked. The metadata in the bitstream may be detected.

The disentanglement may be checked (e.g., by modifying a part of the style vector and verifying that only one grain property is modified).

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A device comprising:
a processor configured to:
obtain a picture,
obtain a supplemental enhancement information (SEI) message comprising a first style vector and a first information indicating disentanglement of the first style vector;
obtain a request for changing a film grain characteristic to a first changed value;
identify, using the first information indicating disentanglement of the first style vector, a first style vector characteristic that corresponds to the film grain characteristic, wherein the first style vector characteristic is identified from the first information indicating disentanglement of the first style vector;
modify the first style vector characteristic based on the film grain characteristic being set to the first changed value to derive a modified first style vector; and
generate the film grain on the picture, wherein the film grain is generated using the modified first style vector.

2. The device of claim 1, wherein the first information indicating disentanglement of the first style vector comprises information indicating how properties associated with the film grain are organized in the first style vector.

3. The device of claim 1, wherein the first information indicating disentanglement of the first style vector comprises information about dividing the first style vector into at least one of: one or more parts, one or more subparts, or, one or more subparts of the subparts, each corresponding to a category of characteristics or a characteristic.

4. The device of claim 1, wherein the processor is further configured to map style vector characteristics to grain characteristics that are indicated by a supplemental information associated with a video coding technique.

5. The device of claim 1, wherein the SEI message comprises second style vector and a second information indicating how to disentangle the second style vector.

6. The device of claim 5, wherein the processor is further configured to:
identify a second style vector characteristic based on the second information indicating how to disentangle the second style vector;
modify the second style vector characteristic based on the film grain characteristic being set to a second changed value to derive a modified second style vector;
modulate the modified first style vector by the modified second style vector to generate a modulated modified first style vector; and
use the modulated modified first style vector for film grain synthesis.

7. The device of claim 5, wherein at least the first style vector or another style vector are computed to be used on different parts of the picture.

8. A method comprising:
obtaining a picture,
obtaining a supplemental enhancement information (SEI) message comprising a first style vector and a first information indicating disentanglement of the first style vector;
obtaining a request for changing a film grain characteristic to a first changed value;
identifying, using the first information indicating disentanglement of the first style vector, a first style vector characteristic that corresponds to the film grain characteristic, wherein the first style vector characteristic is identified from the first information indicating disentanglement of the first style vector;
modifying the first style vector characteristic based on the film grain characteristic being set to the first changed value to derive a modified first style vector; and
generating the film grain on the picture, wherein the film grain is generated using the modified first style vector.

9. The method of claim 8, wherein the first information indicating disentanglement of the first style vector comprises information indicating how properties associated with the film grain are organized in the first style vector.

10. The method of claim 8, wherein the first information indicating disentanglement of the first style vector comprises information about dividing the first style vector into at least one of: one or more parts, one or more subparts, or, one or more subparts of the subparts, each corresponding to a category of characteristics or a characteristic.

11. The method of claim 8, further comprising mapping style vector characteristics to grain characteristics that are indicated by a supplemental information associated with a video coding technique.

12. The method of claim 8, wherein the SEI message comprises second style vector and a second information indicating how to disentangle the second style vector.

13. The method of claim 12, further comprising:
identifying a second style vector characteristic based on the second information indicating how to disentangle the second style vector;
modifying the second style vector characteristic based on the film grain characteristic being set to a second changed value to derive a modified second style vector;
modulating the modified first style vector by the modified second style vector to generate a modulated modified first style vector; and
using the modulated modified first style vector for film grain synthesis.

14. The method of claim 12, wherein at least the first style vector or another style vector are computed to be used on different parts of the picture.

15. The device of claim 5 or the method of claim 12, wherein a size of the first style vector or the second style vector is 8 bits.
